# DEMANDE DE BREVET EUROPEEN

(11) **EP 1 944 239 A1**
(43) Date de publication de la demande: **16.07.2008**
(21) Numéro de dépôt: 08370001.3
(22) Date de dépôt: 10.01.2008
(51) Int. Cl.: B65B 13/06, B65B 25/02, A01G 5/02

(54) **Procédé pour la préparation d'emballages de compositions florales et/ou végétales**

(30) Priorité: 11.01.2007 FR 0700199
(71) Demandeur: Clayrton's, 59100 Roubaix (FR)
(72) Inventeur: Lepoutre, Alban-Josse, 59100 Roubaix (FR)
(74) Mandataire: Duthoit, Michel Georges André

(57) **Abrégé**

L'invention concerne un procédé d'emballes de compositions florales et/ou végétales et notamment de bouquets, pour former une poche réalisée à partir d'une feuille façonnée autour de la base de la composition et notamment autour des tiges des bouquets, ledit procédé présentant au moins les étapes suivantes réalisées sur un poste (1) présentant au moins un plan de travail (2) avec une ouverture (17) débouchant sur une réservation (15) :
- on positionne une feuille sur le plan de travail,
- on forme la poche dans la réservation (15), et on la remplit,
- on dispose ensuite un feuillard plastique (60) autour du col de la poche.

Selon l'invention, on forme la poche et on la remplit corrélativement au moyen d'un élément tubulaire combinant une fonction de réserve tampon pour un fluide de remplissage et une fonction de poussoir.

L'invention concerne également un poste de travail convenant pour la mise en oeuvre du procédé et trouvera une application particulière pour l'élaboration de bouquets à réserve d'eau.

## Description

L'invention est relative à un procédé pour la préparation d'emballages de compositions florales et/ou végétales, et notamment de bouquets, et concerne également un poste de travail, notamment semi-automatisé, convenant à la mise en oeuvre dudit procédé. Elle trouvera une application particulière et non limitative pour l'élaboration de bouquets à réserve d'eau.

L'emballage d'un tel type de bouquet à réserve d'eau se compose d'une ou plusieurs feuilles superposées, imperméables, d'un support de bouquet, généralement plastique et rigide, destiné à assurer la tenue du bouquet et d'un lien, de manière connue un élastique, une ficelle ou un ruban de type Bolduc, pour la ligature du bouquet.

Le procédé pour l'élaboration d'un bouquet à réserve d'eau consiste donc à former une poche étanche autour du support de bouquet à l'aide d'une ou plusieurs feuilles imperméables, à remplir la poche d'une quantité d'eau et à ligaturer le col de la poche autour des tiges du bouquet.

Divers postes de travail semi-automatiques connus permettent d'assister un opérateur dans son élaboration. A chaque cycle, par exemple, pour un poste connu, l'opérateur intervient pour positionner un lien, plus particulièrement un élastique, sur des doigts de pose semi-automatiques du lien, pour positionner une ou plusieurs feuilles imperméables sur un plan de travail, et pour superposer le support de bouquet avec le bouquet sur ladite feuille. La formation de la poche et la pose du lien, à savoir de l'élastique sur le col de la poche est ensuite réalisée automatiquement.

Le but de la présente invention est de proposer un procédé pour la réalisation d'emballages et un poste de travail, notamment semi-automatisé, de capacité supérieure permettant notamment de réaliser de 300 à 400 bouquets par heure.

Un autre but de l'invention est de proposer un procédé et un dispositif permettant de réduire le temps nécessaire à la formation de la poche et son remplissage lors de l'évaluation d'un bouquet à réserve d'eau.

Un autre but de l'invention est de proposer un procédé et un poste de travail permettant une alimentation et une découpe automatique des feuilles imperméables, à partir d'un rouleau de bande imperméable.

Un autre but de l'invention est de proposer un procédé et un poste de travail permettant la réalisation d'emballages, notamment de bouquets à réserve d'eau dont la ligature est particulièrement résistante et automatisée.

D'autres buts et avantages apparaîtront au cours de la description qui va suivre, qui n'est donnée qu'à titre indicatif et qui n'a pas pour but de la limiter.

L'invention concerne un procédé pour la préparation d'emballages de compositions florales spécialement prévus pour l'élaboration d'un bouquet avec réserve d'eau dans lequel on forme à l'aide d'au moins une feuille imperméable aux liquides une poche étanche autour d'un support de bouquet, on remplit la poche d'une quantité d'eau et on ligature le col de la poche autour des tiges du bouquet, le procédé présentant au moins les étapes suivantes réalisées sur un poste présentant au moins un plan de travail avec une ouverture débouchant sur une réservation et dans lequel :
- on positionne une feuille sur le plan de travail,
- on forme la poche dans la réservation et on la remplit,
- on ligature le col de la poche, autour des tiges du bouquet.

Selon l'invention, on forme la poche et on la remplit corrélativement, l'étape de formage de ladite poche à l'aide d'au moins une feuille plastique et l'étape de remplissage de la poche d'une quantité d'eau étant effectuées à l'aide dudit poste dont le plan de travail présente l'ouverture débouchant sur la réservation, le poste présentant, en outre, un élément tubulaire combinant une fonction de réserve tampon pour un fluide de remplissage et une fonction de poussoir, ledit élément tubulaire étant pourvu de moyens d'actionnement selon une course verticale et d'un clapet d'obturation à son extrémité inférieure, les étapes de formage de la poche et de remplissage étant réalisées selon les étapes suivantes :
- on emporte une feuille et un support de bouquet dans la réservation en actionnement vers le bas ledit élément tubulaire, ladite feuille et ledit support de bouquet étant préalablement disposés sur le plan de travail, et, successivement ou conjointement,
- on délivre une quantité d'eau prédéterminée en ouvrant ledit clapet d'obturation.

Selon un mode de réalisation, l'étape de ligature est réalisée par une opération de cerclage dans laquelle on met en tension un feuillard plastique autour du col de la poche et on thermosoude les extrémités superposées du feuillard.

Selon un mode de réalisation, le positionnement de la feuille sur le plan de travail est effectué par l'intermédiaire d'un mécanisme automatisé assurant les étapes suivantes :
- on déroule au moins une bande,
- on découpe au moins une feuille d'une longueur déterminée à partir de ladite au moins une bande sur le plan de travail.

Selon un mode de réalisation, le mécanisme automatisé pour le déroulement de la bande et la découpe de la feuille comprend :
- au moins un rouleau de bande imperméable imprimée,
- un dispositif de conduite de bande comprenant au moins un cylindre d'entraînement motorisé, ainsi qu'un capteur de déplacement de la bande,
- des moyens de coupe de la bande, motorisés,
- des moyens pour immobiliser localement la bande au niveau d'une zone de coupe,
- une caméra vidéo,
- une unité logique de traitement pour la commande des organes motorisés dudit mécanisme, l'unité logique présentant des moyens de lecture des signaux de la caméra vidéo ainsi que des moyens de lecture des signaux du capteur de déplacement de la bande, les phases de déroulement de la bande et de découpe de la feuille consistant au moins en les étapes suivantes, commandées par l'unité logique de traitement :

- on déroule la bande d'au moins une longueur sur le plan de travail et on ajuste le positionnement final de la bande sur ledit plan de travail par le repérage de l'impression de la bande,
- on immobilise localement la bande au niveau de la zone de coupe et on découpe une feuille.

Selon un mode de réalisation, le plan de travail est constitué par un plateau mobile selon un plan horizontal et dans lequel une fois la feuille positionnée sur ledit plateau, on assure le centrage de la feuille par rapport à la réservation par le déplacement dudit plateau.

L'invention concernera en outre un poste de travail convenant pour la mise en oeuvre du procédé pour l'élaboration d'un bouquet avec réserve d'eau, dans lequel on forme à l'aide d'au moins une feuille imperméable aux fluides une poche étanche autour d'un support de bouquet, on remplit la poche d'une quantité d'eau et on ligature le col de la poche autour des tiges du bouquet, ledit poste présentant un plan de travail avec une ouverture débouchant sur une réservation.

Le poste conforme à l'invention présente, en outre des moyens mécaniques pour former la poche dans la réservation et la remplir corrélativement, ledit poste présentant un élément tubulaire combinant une fonction de réserve tampon pour un fluide de remplissage et une fonction de poussoir, ledit élément tubulaire étant pourvu de moyens d'actionnement selon une course verticale, apte à abaisser l'extrémité dudit élément tubulaire dans la réservation ou encore la relever hors de la réservation, ledit élément tubulaire présentant un clapet d'obturation à son extrémité inférieure.

L'invention sera mieux comprise à la lecture de la description suivante accompagnée des dessins en annexe parmi lesquels :
- les figures 1, 2 et 3 sont respectivement des vues de côté, de face et de dessus d'un poste semi-automatisé pour l'élaboration d'un bouquet à réserve d'eau, selon l'invention,
- la figure 4 est une vue de dessus illustrant un dispositif pour le cerclage automatique au moyen d'un feuillard plastique, intégré au poste des figures 1 à 3,
- la figure 5 est une vue schématique illustrant le mécanisme automatisé pour le positionnement de la feuille sur le plan de travail du poste notamment des figures 1 à 3,
- les figures 6 et 7 sont respectivement des vues schématiques des moyens pour immobiliser la bande et des moyens de coupe du mécanisme automatisé tel qu'illustré à la figure 5,
- les figures 8 et 9 sont respectivement des vues schématiques des moyens mécaniques pour former la poche et la remplir corrélativement, selon deux positions respectives d'un élément tubulaire, mis en oeuvre dans le poste des figures 1 à 3,

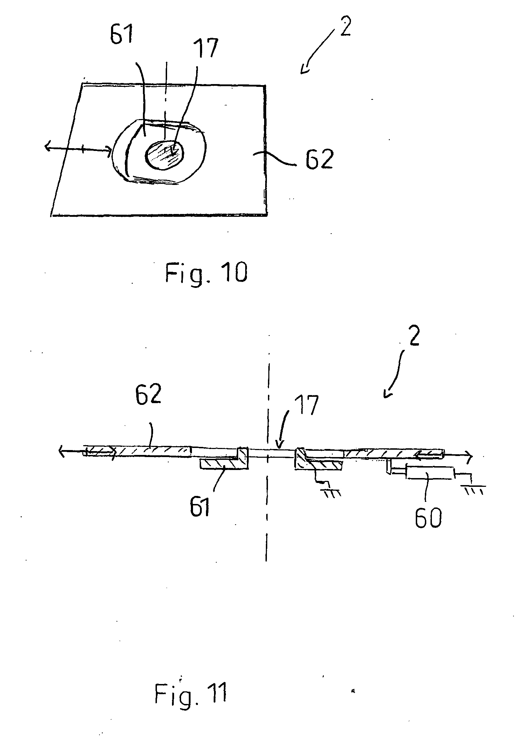

- les figures 10 et 11 sont respectivement des vues de dessus et de coupe d'un plan de travail conforme à l'invention selon un mode de réalisation équipé d'un plateau mobile pour le centrage automatique de la feuille par rapport à la réservation.

Le poste de travail conforme à l'invention convient pour la mise en oeuvre d'un procédé d'emballages de compositions florales et/ou végétales et notamment de bouquets, pour former une poche réalisée à partir d'une feuille façonnée autour de la base de la composition et notamment des tiges des bouquets. Il présente un plan de travail 2 avec une ouverture 17 débouchant sur une réservation 15.

Le poste de travail conforme convient pour la mise en oeuvre d'un procédé pour l'élaboration d'un bouquet avec réserve d'eau dans lequel on forme, à l'aide d'au moins une feuille imperméable aux fluides, une poche étanche autour d'un support de bouquet, on remplit la poche d'une quantité d'eau et on ligature le col de la poche autour des tiges du bouquet.

Ledit poste 1 présente le plan de travail 2.avec l'ouverture 17 débouchant sur la réservation 15. Selon l'invention, le poste 1 présentant, en outre des moyens mécaniques 40 pour former la poche dans la réservation 15 et la remplir corrélativement. Ces moyens mécaniques 40 sont constitués, outre l'ouverture 17 et la réservation 15, d'un élément tubulaire 13.

Les moyens mécaniques 40 pour former la poche dans la réservation et la remplir corrélativement sont développés par la suite.

Tel qu'illustré, le plan de travail présente une ouverture 17 débouchant sur une réservation 15, inférieure. Cette réservation 15 présente un fond 35, notamment de hauteur réglable.

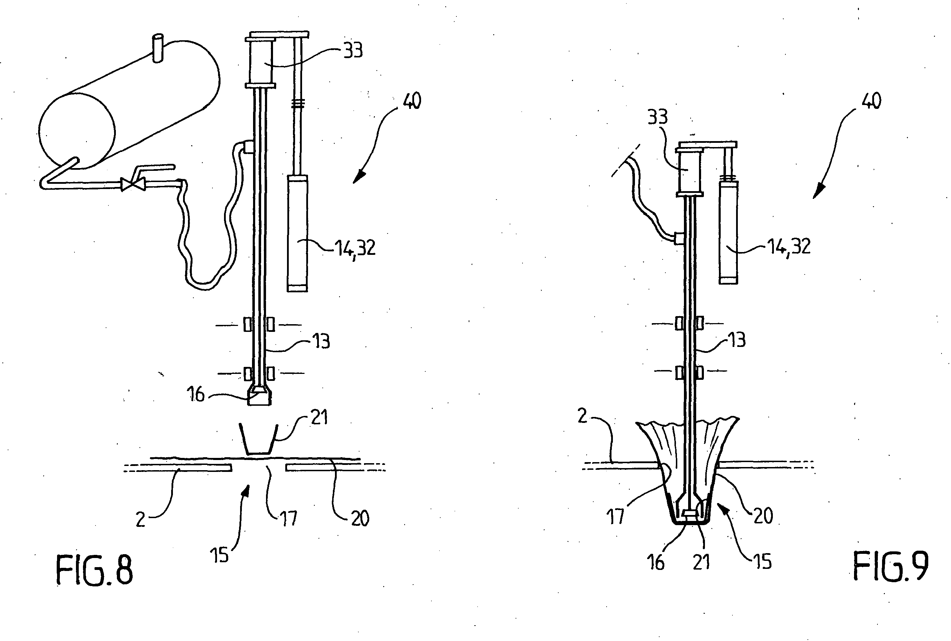

Avantageusement, le poste 1 présente en outre, un élément tubulaire 13 combinant une fonction de réserve tampon pour un fluide de remplissage et une fonction de poussoir. L'élément tubulaire est ainsi pourvu de moyens d'actionnement 14 selon une course verticale, apte à abaisser l'extrémité basse dudit élément tubulaire 13 dans la réservation 15, tel qu'illustré notamment à la figure 9, ou encore la relever hors de la réservation, tel que notamment illustré à la figure 8. Cet élément tubulaire 13 présente un clapet d'obturation 16 à son extrémité basse.

La tête de l'élément tubulaire permet ainsi d'emporter le support 21 et la feuille 20, préalablement superposés et mis en place, notamment par un opérateur, en actionnant vers le bas l'élément tubulaire. Cette étape assure la formation de la poche autour dudit support de bouquet. La quantité d'eau prédéterminée est délivrée successivement, voire conjointement, c'est-à-dire pendant que la feuille est emportée, en ouvrant le clapet d'obturation 16. Bien entendu, le clapet 16 n'est pas ouvert immédiatement après la mise en action vers le bas de l'élément tubulaire 13, mais est toutefois actionné à l'ouverture avant que l'élément 13 atteigne la fin de course basse, c'est-à-dire dans une position intermédiaire dans laquelle la feuille forme une poche dont le volume interne permet de contenir la quantité d'eau déversée.

Il est à noter que cet élément tubulaire 13 à fonction de réserve d'eau permet un déversement très rapide de la colonne d'eau accumulée dans l'élément 13. Le diamètre interne de l'élément tubulaire 13 ainsi que celui de l'ouverture inférieure, notamment obturée par le clapet 16, devront être suffisamment larges, notamment compris entre 3 cm et 8 cm. Avantageusement, le volume interne de l'élément tubulaire sera rempli en temps masqué notamment pendant les étapes du procédé, autres que celles du remplissage de la poche.

Tels qu'illustrés à la figure 8, les moyens d'actionnement 14 peuvent être constitués par un premier vérin pneumatique 32, ledit élément tubulaire 13 présentant un deuxième vérin pneumatique 33 pour la commande du clapet 16, notamment à la fermeture ou à l'ouverture, dont la tige du piston est interne audit élément 13.

Selon un mode particulier de l'invention, le poste 1 peut présenter, en outre tout ou partie des éléments suivants :
- un mécanisme automatisé 3 pour dérouler au moins une bande 12 et découper à partir de ladite au moins une bande au moins une feuille d'une longueur déterminée sur le plan de travail, et/ou,
- des moyens pour le cerclage du col de la poche au moyen d'un feuillard plastique.

Selon un exemple de réalisation, le plan de travail du poste présente l'ouverture 17 débouchant sur la réservation 15 ainsi qu'un dispositif 18 pour le cerclage automatique du col de la poche comprenant au moins :
- un guide incurvé 51 pour un feuillard plastique, ledit guide incurvé 51 étant disposé suivant un plan horizontal autour de ladite réservation 15,
- un mécanisme 52 de mise en tension du feuillard 60 et une unité de soudage 53 des extrémités superposées du feuillard.

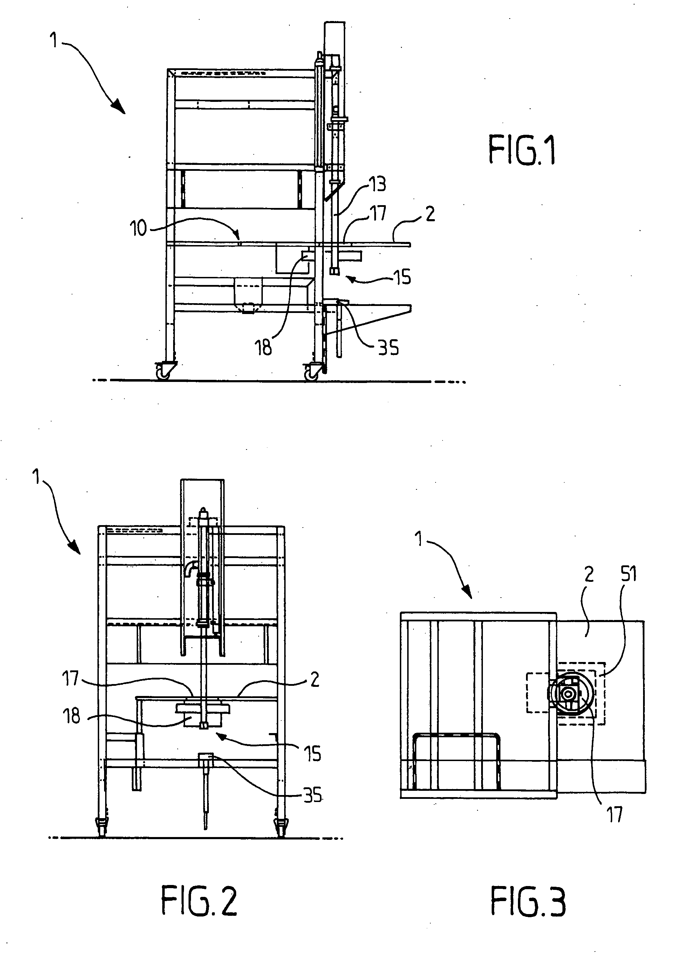

Notamment tel qu'illustré selon l'exemple de réalisation du poste des figures 1 et 2, le guide incurvé 51 est situé sous une table définissant le plan de travail 2.

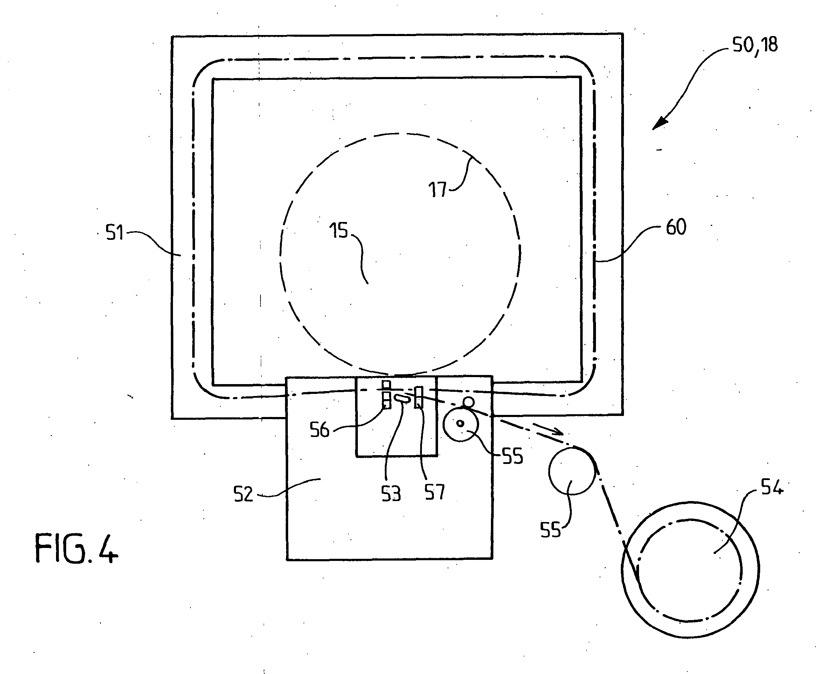

Tel qu'illustré à la figure 4, le dispositif 18 pour le cerclage automatique est pourvu en feuillard plastique au moyen d'un rouleau de stockage 54 de feuillard. Un ensemble de rouleaux 55, notamment motorisés, permet de dérouler le feuillard plastique et de le déployer dans le guide incurvé pour former une boucle autour de l'objet à cercler, dans un plan sensiblement horizontal.

L'extrémité libre du feuillard 60 est alors maintenue par une première pince 56. Le mécanisme 52 permet alors, sous l'action des rouleaux motorisés 55, le resserrement puis la mise en tension du feuillard sur l'objet à cercler. Une deuxième pince 57 permet, en fin de serrage, de maintenir, conjointement avec la première pince 56, les extrémités de la partie de feuillard 60 constituant le lien, superposées.

L'unité de soudage 53, notamment constituée par une lame chauffante, permet de souder à chaud les extrémités superposées du feuillard 60, assurant, le cas échéant, simultanément la découpe du lien.

Pour plus de détails quant à la structure de ce dispositif pour le cerclage automatique, l'homme du métier pourra se référer notamment au document US-6.568.317.

Toutefois, selon l'invention, une attention particulière est apportée au niveau de la tension du feuillard pour qu'il ne soit pas destructeur des tiges du bouquet, fragiles par ailleurs.

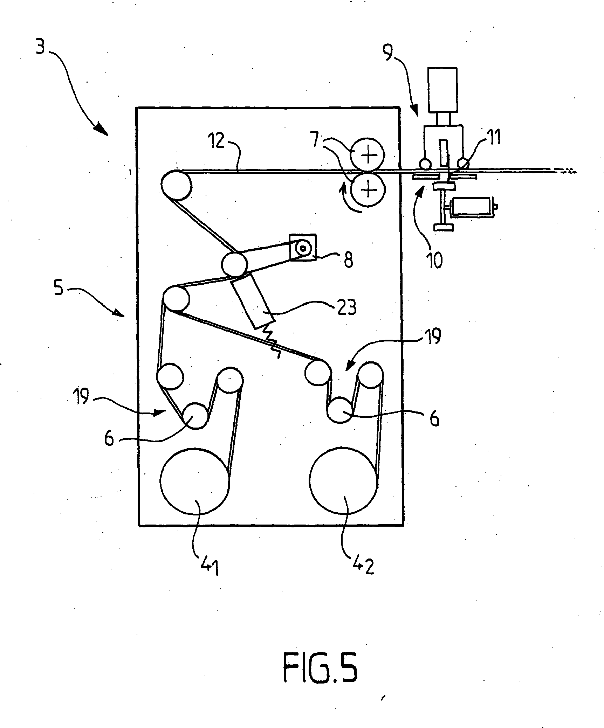

Tel qu'illustré selon l'exemple de réalisation de la figure 5, le mécanisme automatisé 3 pour le déroulement de la bande et la découpe de la feuille sur le plan de travail 2 comprend :
- au moins un rouleau 4₁, 4₂ de bande imperméable, au moins aux liquides, imprimée,
- un dispositif 5 de conduite de bande, comprenant au moins un cylindre d'entraînement motorisé 6, 7 ainsi qu'un capteur de déplacement 8 de la bande,
- des moyens de coupe 11 de la bande motorisée,
- des moyens 9 pour immobiliser localement la bande au niveau d'une zone de coupe 10,
- une caméra vidéo, et
- une unité logique de traitement pour la commande des organes motorisés dudit mécanisme, l'unité logique présentant des moyens de lecture des signaux de la caméra vidéo ainsi que des moyens de lecture des signaux du capteur de déplacement 8 de la bande.

Ce mécanisme automatisé 3 permettra notamment le déroulement de la bande 12 et la découpe d'une feuille de longueur prédéterminée en repérant automatiquement l'impression de la bande.

Le mécanisme automatisé peut également présenter des moyens de réglage de la valeur de ladite longueur prédéterminée, par exemple, pour l'obtention de feuilles de 500 mm, de 600 mm, de 700 mm ou de 800 mm de longueur. Il pourra notamment s'agir d'un bouton de sélection, notamment rotatif entre plusieurs valeurs choisies.

Le procédé de déroulement de la bande et découpe de la feuille consiste, tout d'abord, à dérouler une longueur de bande, inférieure à ladite longueur prédéterminée, sur le plan de travail 2. Pour ce faire, l'unité logique de traitement actionne les cylindres motorisés 6, 7 au déroulement, et contrôle simultanément la longueur de bande déroulée par l'intermédiaire du capteur de déplacement 8.

Dès que la longueur de bande est déroulée, l'unité logique de traitement contrôle le positionnement de l'impression de la bande 12 par l'intermédiaire de la caméra vidéo et déroule les derniers centimètres de bande notamment jusqu'à l'obtention d'une feuille de longueur prédéterminée, notamment sélectionnée. L'unité logique de traitement actionne ensuite les moyens 9 pour immobiliser localement la bande au niveau de la zone de coupe 10 puis actionne les moyens de coupe 11, motorisés.

Plus particulièrement, selon cet exemple illustré, le dispositif 5 de conduite de bande, présente en aval de chaque rouleau de bande imperméable 4₁, 4₂ , c'est-à-dire suivant le sens de défilement de la bande, un bloc en forme de S 19 avec un premier rouleau motorisé 6, un capteur 23 pour la mesure de la tension de la bande, mesurant notamment la déflection de la bande, le capteur 8 de déplacement de la bande, ainsi qu'un deuxième motorisé 7.

Avantageusement ledit premier cylindre motorisé 6 pourra être asservi en vitesse, le deuxième cylindre motorisé 7 étant asservi en contrainte en fonction de la valeur mesurée par le capteur 23 pour la mesure de la tension de la bande. Le dispositif de conduite de bande 5 pourra présenter ainsi des moyens pour asservir en vitesse le premier cylindre motorisé 6 et des moyens pour asservir en contrainte le deuxième cylindre motorisé 7.

Les phases successives du déroulement de bande et de découpe de la feuille peuvent être commandées par un opérateur, notamment au moyen d'un bouton poussoir ou encore lors de la détection d'une traction sur la bande 12, notamment par le capteur 23, sous l'action manuelle de l'opérateur.

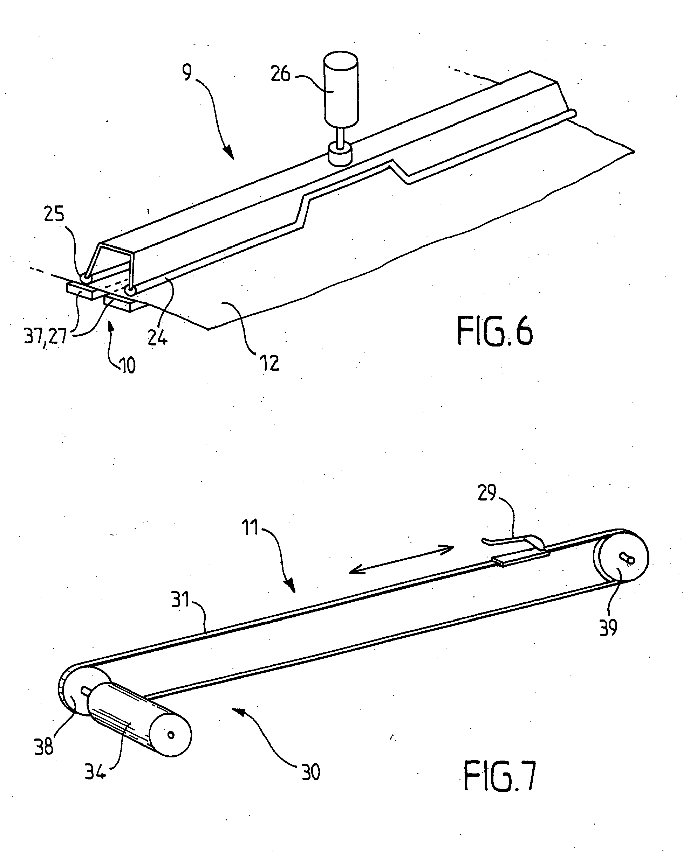

Tels qu'illustrés à la figure 6, selon un exemple de réalisation, les moyens 9 pour immobiliser la bande 12 localement au niveau de la zone de coupe 10 peuvent être constitués par un mécanisme comprenant un cavalier avec deux boudins d'appui 24, 25, en matière souple, de type caoutchouc ou polymère, lesdits boudins étant disposés parallèles et espacés entre eux.

Les boudins sont transversaux par rapport au sens de défilement de la bande 12. Le mécanisme présente un vérin 27 pour l'actionnement desdits boudins à l'encontre d'une surface d'appui de la zone de coupe. Tels qu'illustrés à la figure 7, les moyens de coupe sont constitués par un couteau mobile 29 actionné par des moyens moteur 30. La course du couteau 29 permet de réaliser la coupe entre lesdits boudins d'appui 24, 25.

Notamment, telle qu'illustrée à la figure 6, la surface d'appui 27 présente une fente pour le passage de la lame du couteau 29. Cette surface 27 est notamment constituée par deux plaques 37 métalliques connectées électriquement au bâti métallique du poste, permettant notamment de décharger l'électricité statique accumulée par la bande 12, notamment lors des frottements.

Les moyens moteur 30 du couteau mobile 29 peuvent être constitués par un élément souple 31, tel qu'une courroie ou une chaîne, sur lequel est assujetti ledit couteau 29. L'élément souple est guidé par deux roues, dont l'une est motrice, notamment dentée. L'élément souple est actionné par un moteur électrique 34, les moyens 11 de coupe présentant en outre des moyens de guidage du couteau 29 en translation, tels qu'un rail ou une glissière.

Une fois la feuille de longueur déterminée découpée par le couteau 29 sur le plan de travail, il se peut que la feuille 20 ne soit pas centrée sur la réservation 15. Cette étape pourra être réalisée manuellement par l'opérateur, notamment à l'aide d'un système de réglettes, voire d'un laser dont le faisceau lumineux, vertical, permettra de repérer le centre de la réservation.

Alternativement, le centrage de la feuille par rapport à la réservation peut être réalisé mécaniquement et automatiquement, la table ou plateau constituant le plan de travail 2 étant prévue mobile selon un mouvement de translation horizontal, notamment grâce à des moyens d'actionnement en translation, tels qu'un vérin électrique 60. Par exemple, cette table peut être dans une position avancée ou reculée lors de la découpe de la bande 12 par le couteau 29, de telle façon que la feuille découpée soit centrée sur l'ouverture 17 de la table. Selon un mode de réalisation, la table peut être en deux parties, constituée d'un plateau fixe 61, d'une part, à l'intérieur duquel est formée l'ouverture 17 pour le formage de la feuille, et d'un plateau mobile 62, d'autre part, pour le recentrage de la feuille.

Une fois la découpé effectuée, le plateau mobile 62 se déplace automatiquement pour centrer la feuille par rapport à la réservation 15. Le système est mécanique et peut offrir deux modes de centrage possibles, par exemple pour des feuilles de 70 x 70 cm et des feuilles de 80 x 80 cm. Pour des feuilles de 80 x 80 cm, on positionne des butées sur le plateau fixe 61 qui limitent la course du plateau mobile 62. Pour les feuilles de 70 x 70 cm, ces butées sont retirées afin de permettre un déplacement plus important du plateau 62.

Tel qu'illustré selon les figures 1 à 3, le bâti du poste 1 pourra être constitué par un chariot constitué d'un treillis. Le poste permettra l'élaboration d'un bouquet à réserve d'eau selon le cycle suivant :
- déroulement d'au moins une bande et découpe automatique d'au moins une feuille de longueur prédéterminée sur le plan de travail, commandées par l'opérateur, notamment par un bouton,
- le cas échéant, recentrage automatique de la feuille par rapport à la réservation, par déplacement du plateau mobile,
- positionnement manuel par un opérateur d'un support de bouquet sur la ou les feuilles, à l'aplomb de la réservation,
- formation et remplissage automatique de la poche sous l'action de l'élément 13 commandés par l'opérateur, notamment par un bouton poussoir ou une pédale,
- insertion manuelle des tiges du bouquet dans la poche par un opérateur,
- cerclage automatique du col de la poche autour des tiges du bouquet, commandé par l'opérateur, notamment par un bouton poussoir ou une pédale.

Naturellement, d'autres modes de mise en oeuvre, à la portée de l'homme de l'art, auraient pu être envisagés sans pour autant sortir du cadre de l'invention définie par les revendications ci-après.

## Revendications

1. Procédé pour la préparation d'emballages de compositions florales, spécialement prévu pour l'élaboration d'un bouquet avec réserve d'eau, dans lequel on forme, à l'aide d'au moins une feuille imperméable aux liquides, une poche étanche autour d'un support de bouquet, on remplit la poche d'une quantité d'eau et on ligature le col de la poche autour des tiges du bouquet, le procédé présentant au moins les étapes suivantes réalisées en un poste présentant au moins un plan de travail avec une ouverture débouchant sur une réservation, et dans lequel :
- on positionne une feuille sur le plan de travail,
- on forme la poche dans la réservation et on la remplit,
- on ligature le col de la poche autour des tiges du bouquet,
**caractérisé en ce que** l'étape de formage de ladite poche à l'aide d'au moins une feuille plastique et l'étape de remplissage de la poche d'une quantité d'eau sont effectuées à l'aide dudit poste (1) dont le plan de travail (2) présente l'ouverture (17) débouchant sur la réservation (15), le poste présentant, en outre, un élément tubulaire (13) combinant une fonction de réserve tampon pour un fluide de remplissage et une fonction de poussoir, ledit élément tubulaire (13) étant pourvu de moyens d'actionnement (14) selon une course verticale et d'un clapet d'obturation (16) à son extrémité inférieure, les étapes de formage de la poche et de remplissage étant réalisées selon les étapes suivantes :
- on emporte une feuille (20) et un support de bouquet (21) dans la réservation (15) en actionnement vers le bas l'élément tubulaire (13), ladite feuille (20) et ledit support de bouquet (21) étant préalablement disposés sur le plan de travail (2), et, conjointement ou successivement,
- on délivre une quantité d'eau prédéterminée en ouvrant le clapet d'obturation (16).

2. Procédé selon la revendication 1, lequel l'étape de ligature est réalisée par une opération de cerclage dans laquelle on met en tension un feuillard plastique autour du col de la poche et on thermosoude les extrémités superposées du feuillard.

3. Procédé selon la revendication 1 ou 2, dans lequel le positionnement de la feuille sur le plan de travail est effectuée par l'intermédiaire d'un mécanisme automatisé assurant les étapes suivantes :
- on déroule au moins une bande,
- on découpe au moins une feuille d'une longueur déterminée à partir de ladite au moins une bande sur le plan de travail.

4. Procédé selon la revendication 3, dans lequel le mécanisme automatisé (3) pour le déroulement de la bande et la découpe de la feuille comprend :
- au moins un rouleau (4₁, 4₂) de bande imperméable imprimée,
- un dispositif (5) de conduite de bande comprenant au moins un cylindre d'entraînement motorisé (6, 7), ainsi qu'un capteur de déplacement (8) de la bande,
- des moyens de coupe (11) de la bande, motorisés,
- des moyens (9) pour immobiliser localement la bande au niveau d'une zone de coupe (10),
- une caméra vidéo,
- une unité logique de traitement pour la commande des organes motorisés dudit mécanisme, l'unité logique présentant des moyens de lecture des signaux de la caméra vidéo ainsi que des moyens de lecture des signaux du capteur de déplacement (8) de la bande, le déroulement de la bande et la découpe de la feuille consistant au moins en les étapes suivantes, commandées par l'unité logique de traitement :
- on déroule la bande (12) d'au moins une longueur sur le plan de travail et on ajuste le positionnement final de la bande sur ledit plan de travail par le repérage de l'impression de la bande,
- on immobilise localement la bande (12) au niveau de la zone de coupe (10) et on découpe une feuille.

5. Procédé selon la revendication 3 ou 4, dans lequel le plan de travail est constitué par un plateau mobile (62) selon un plan horizontal et dans lequel une fois la feuille positionnée sur ledit plateau, on assure le centrage de la feuille par rapport à la réservation par le déplacement dudit plateau.

6. Poste de travail (1) convenant pour la mise en oeuvre du procédé pour l'élaboration d'un bouquet avec réserve d'eau, tel que notamment décrit selon la revendication 1, dans lequel on forme à l'aide d'au moins une feuille imperméable (20) aux fluides une poche étanche autour d'un support de bouquet (21), on remplit la poche d'une quantité d'eau et on ligature le col de la poche autour des tiges du bouquet, ledit poste (1) présentant un plan de travail avec une ouverture (17) débouchant sur une réservation,
**caractérisé en ce que** le poste présente, en outre, des moyens mécaniques (40) pour former la poche dans la réservation (15) et la remplir corrélativement, ledit poste (1) présentant un élément tubulaire (13) combinant une fonction de réserve tampon pour un fluide de remplissage et une fonction de poussoir, ledit élément tubulaire (13) étant pourvu de moyens d'actionnement (14) selon une course verticale, aptes à abaisser l'extrémité basse dudit élément tubulaire (13) dans la réservation (15) ou encore la relever hors de la réservation (15), ledit élément tubulaire (13) présentant un clapet d'obturation (16) à son extrémité inférieure.

7. Poste selon la revendication 6, dans lequel les moyens d'actionnement (14) sont constitués par un premier vérin pneumatique (32), ledit élément tubulaire (13) présentant un deuxième vérin pneumatique (33) pour la commande du clapet (16) dont la tige du piston est interne audit élément (13).

8. Poste selon la revendication 6 ou 7, dans lequel le plan de travail présente l'ouverture (17) débouchant sur la réservation (15), ledit poste présentant, en outre, un dispositif (18) pour le cerclage automatique du col de la poche comprenant au moins :
- un guide incurvé (51) pour un feuillard plastique, ledit guide incurvé (51) étant disposé suivant un plan horizontal autour de ladite réservation (15),
- un mécanisme (52) de mise en tension du feuillard (60) et une unité de soudage (53) des extrémités superposées du feuillard.

9. Poste selon l'une des revendications 6 à 8, présentant, en outre, un mécanisme automatisé pour dérouler au moins une bande et découper à partir de ladite au moins une bande une feuille de longueur déterminée sur le plan de travail.

10. Poste selon la revendication 9, ledit mécanisme automatisé comprenant :
- au moins un rouleau (4₁, 4₂) de bande imperméable imprimée,
- un dispositif (5) de conduite de bande comprenant au moins un cylindre d'entraînement motorisé (6, 7), ainsi qu'un capteur de déplacement (8) de la bande,
- des moyens (11) de coupe de la bande, motorisés,
- des moyens (9) pour immobiliser localement la bande au niveau d'une zone de coupe (10),
- une caméra vidéo, et
- un unité logique de traitement pour la commande des organes motorisés dudit mécanisme, l'unité logique présentant des moyens de lecture des signaux électriques de la caméra vidéo ainsi que des moyens de lecture des signaux du capteur de déplacement (8) de la bande.

11. Poste selon la revendication 10, dans lequel les moyens (9) pour immobiliser la bande localement au niveau d'une zone de coupe sont constitués par un mécanisme comprenant un cavalier avec deux boudins d'appui (24,25), en matière souple, de type caoutchouc ou polymère, disposés parallèles et espacés entre eux, lesdits boudins étant transversaux par rapport au sens de défilement de la bande (12), ledit mécanisme présentant un vérin (26) pour l'actionnement desdits boudins à l'encontre d'une surface d'appui (27) de la zone de coupe, lesdits moyens de coupe étant constitués par un couteau mobile (29), actionné par des moyens moteurs (30) et dont la course permet de réaliser la coupe entre lesdits boudins d'appui.

12. Poste selon l'une des revendications 10 à 11, ledit plan de travail dudit poste est constitué au moins par un plateau mobile (62) selon un plan horizontal muni de moyens d'actionnement en translation.
